Europäisches Patentamt

European Patent Office

Office européen des brevets

(19)

(11) Numéro de publication: **0 280 588**
**A1**

(12) ## DEMANDE DE BREVET EUROPEEN

(21) Numéro de dépôt: **88400109.0**

(22) Date de dépôt: **19.01.88**

(51) Int. Cl.⁴: **H 04 N 5/335**
**H 04 N 5/232**

(30) Priorité: **21.01.87 FR 8700664**

(43) Date de publication de la demande:
**31.08.88 Bulletin 88/35**

(84) Etats contractants désignés: **BE DE GB IT**

(71) Demandeur: **MATRA**
**4 rue de Presbourg**
**F-75016 Paris (FR)**

(72) Inventeur: **Lam, Do Mau**
**28, ter rue Louis Hubert**
**F-78140 Velizy (FR)**

(74) Mandataire: **Fort, Jacques et al**
**CABINET PLASSERAUD 84, rue d'Amsterdam**
**F-75009 Paris (FR)**

(54) **Procédé et dispositif de prise de vue à grande profondeur de champ.**

(57) Le dispositif comprend une optique (12) de formation d'image sur un détecteur (10) à matrice de capteurs. L'optique est constituée de plusieurs secteurs présentant des distances focales différentes mais dont les plans principaux sont aux mêmes emplacements. Les signaux fournis par le détecteur sont appliqués à des moyens de traitement numérique destinés à améliorer le contraste.

FIG.1.

EP 0 280 588 A1

## Description

Procédé et dispositif de prise de vue à grande profondeur de champ.

L'invention concerne les procédés et dispositifs de prise de vue, ce dernier terme devant être interprété dans un sens large et comme couvrant aussi bien le cas d'observation visuelle que celui d'enregistrement de l'image. Elle vise à permettre une prise de vue à grande profondeur de champ en utilisant des moyens simples et statiques, à l'aide d'un système optique qui peut avoir une grande ouverture.

Pour donner une grande profondeur de champ à un système optique, la solution classique consiste à en réduire l'ouverture angulaire. Mais cela implique que l'objet soit fortement éclairé ou que l'on utilise des temps d'exposition importants, ce qui est souvent impossible, par exemple dans le cas de certaines observations scientifiques et/ou de scènes animées à éclairage naturel. Lorsqu'il n'est pas nécessaire de disposer d'une image nette sur toute la profondeur à la fois, on peut utiliser des systèmes optiques à focal variable, qui permettent de "suivre" les variations de distance d'un objet. Mais cela implique que le système optique comporte des composants mobiles, est difficilement compatible avec la poursuite d'objets dont la distance varie et interdit d'observer l'ensemble d'une scène de profondeur notable.

Pour fournir des images nettes sur une profondeur importante avec une forte ouverture angulaire, et ce de façon simple, l'invention propose un procédé suivant lequel on forme l'image de la scène sur un détecteur à matrice de capteurs à l'aide d'une optique, procédé caractérisé en ce qu'on forme sur le détecteur l'image nette de plusieurs plans de la même scène situés à des distances différentes à l'aide de secteurs angulaires différents de l'optique et en ce qu'on améliore le contraste de l'image par traitement des signaux fournis par les capteurs.

Chaque pixel de l'image, fourni par un capteur, résulte de la superposition d'un point net (correspondant au secteur pour lequel il y a mise au point) et de points flous qui dégradent l'image originale. Mais il n'y a pas de perte de l'information. Le traitement peut être sommaire et se limiter à un seuillage constitué par la soustraction, à l'intensité de chaque pixel, d'une fraction déterminée du niveau moyen sur l'ensemble de l'image.

Lorsque le gain de contraste obtenu par ce traitement sommaire est insuffisant, on peut utiliser un traitement par convolution, possible du fait que, parmi les points superposés correspondant à chaque pixel, l'un correspond à une image nette.

L'invention propose également un dispositif de prise de vue comprenant une optique de formation d'image sur un détecteur à matrice de capteurs électro-optiques, caractérisé en ce que l'optique est constituée de plusieurs secteurs présentant des distances focales différentes et en ce que le détecteur est associé à des moyens de traitement numérique de l'image fournie par le détecteur, tous les secteurs de l'optique ayant leurs plans principaux aux mêmes emplacements.

Du fait de cette coïncidence de plans principaux, on respecte les règles de la projection conique et les images élémentaires fournies par les différents secteurs sont superposables, du moins lorsque le champ du système optique n'est pas excessive.

Les moyens de traitement destinés à améliorer le constraste peuvent, dans le cas le plus grosier, se limiter à un circuit de détermination du niveau moyen d'intensité lumineuse de l'image par sommation des signaux fournis par les capteurs et division et à un soustracteur. La visualisation peut être directe, sur un écran d'observation à balayage ou matriciel, ou peut être à enregistrement et restitution.

L'invention trouve de nombreux domaines d'application parmi lesquels ou peut citer : les observations scientifiques, notamment en télésurveillance spatiale ; la microscopie dans des conditions permettant de supprimer ou de simplifier la mise au point ; l'observation de scènes qu'il est nécessaire d'éclairer faiblement, par exemple en biologie ; la surveillance automatique de scènes profondes ; l'observation à grande ouverture sur une grande profondeur, notamment en infrarouge ; enfin, la prise de vue à partir d'un robot déplaçable dans un environnement d'éclairage variable, permettant l'accostage l'évitement d'un objet.

L'invention sera mieux comprise à la lecture de la description qui suit d'un mode particulier de réalisation donné à titre d'exemple non limitatif. La description se réfère aux dessins qui l'accompagnent dans lesquels :

- la figure 1 est un schéma de principe d'un dispositif comportant une optique à trois secteurs ;
- les figures 2A à 2D sont des diagrammes montrant l'allure de courbes intervant dans l'étalonnage du dispositif.

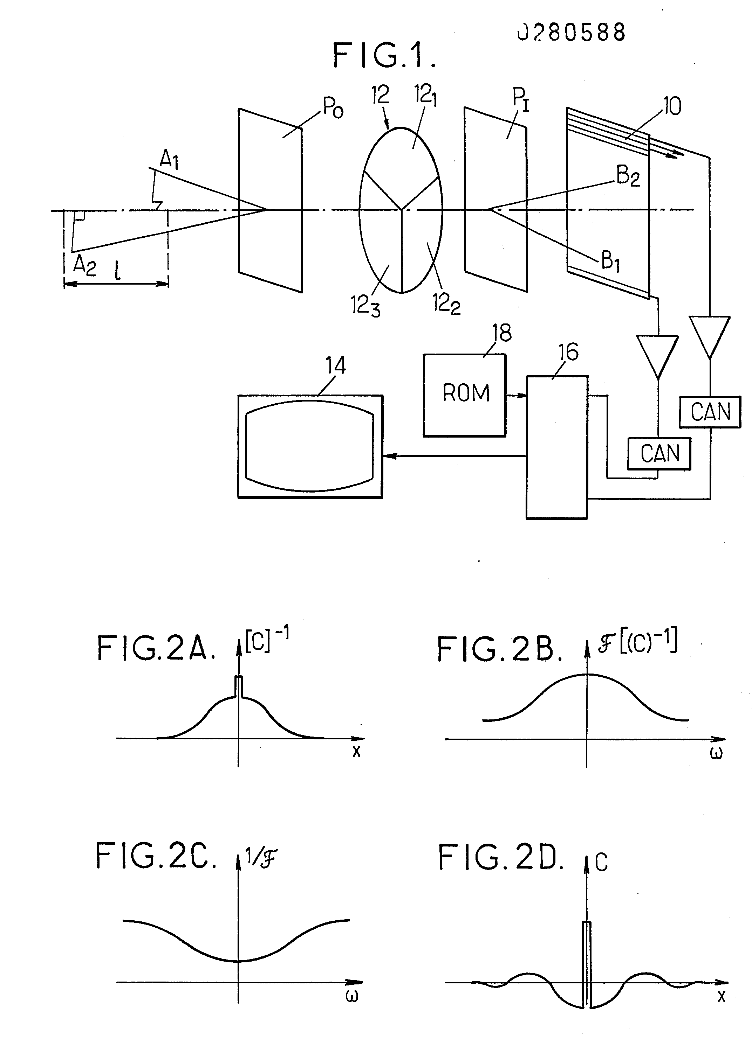

Le dispositif schématisé en figure 1 comporte un détecteur 10, que l'on supposera par la suite être une caméra à matrice de capteurs CCD, et un système optique 12 représenté par une lentille unique. Ce système optique est destiné à fournir une image d'une scène ayant une profondeur $\ell$ suivant l'axe optique du système. Pour cela, on constitue le système optique de plusieurs secteurs angulaires. Dans le mode de réalisation montré en figure 1, le système optique comporte trois secteurs $12_1$, $12_2$ et $12_3$ ayant :

-les mêmes plans principaux $P_0$ et $P_I$,

-des distances focales différentes, les distances focales extrêmes correspondant, sur le détecteur 10, à des images nettes B2 et B1 pour les points les plus éloignés A2 et les plus proches A1 du champ de profondeur $\ell$

Le nombre de secteurs sera pratiquement toujours compris entre trois et six, souvent de trois ou quatre. Le système optique peut comporter non pas une, mais plusieurs lentilles montées de façon à éviter que des rayons ayant traversé un secteur donné de la première lentille traversent un secteur différent de la lentille suivante. Pratiquement, la lentille ou chaque lentille du système optique multifocal peut être constituée de plusieurs secteurs angulaires découpés dans des lentilles ayant des distances focales différentes et collés les uns aux autres en les disposant de façon à faire coïncider les plans principaux. Le système est complété par des diaphragmes non représentés.

Chaque point de la scène donne naissance, sur le détecteur 10, à une superposition de points nets et de points flous. La qualité de l'image s'en trouve dégradée. Le contraste de l'image fourni par le détecteur peut être amélioré en utilisant des traitements plus ou moins complexes selon la qualité d'image à obtenir ou le degré de complication acceptable.

La méthode la plus simple consiste à retrancher de l'image une proportion déterminée du niveau moyen d'intensité. Ce niveau moyen est déterminé par sommation des signaux fournis par les capteurs et divisions du total.

Une méthode de traitement plus rigoureuse se ramène à une convolution plus ou moins complexe. On décrira, à titre d'exemple, un procédé de correction applicable notamment lorsque l'image est fournie par le détecteur sous forme de pixels représentés chacun par un signal électrique.

Si on désigne par :
I l'image idéale à restituer,
I' l'image dégradée fournie par le système optique et dont une représentation est fournie par le détectur sous forme de pixels,
n le nombre de secteurs de l'optique,
F la fonction de modulation des composantes floues,
* l'opérateur de convolution,
on a :

$$I' = (\frac{1}{n} + \frac{n-1}{n} \, F) * I$$

Pour reconstituer l'image idéale I à partir de l'image réelle I', il faut faire subir à l'image la convolution inverse :

$$I = (\frac{1}{n} + \frac{n-1}{n} \, F)^{-1} * I'$$

qu'on peut écrire
I = C * I'

La fonction C représente une surface bi-dimensionnelle et peut être calculée une fois pour toute pour une optique donnée.

Pratiquement, la restitution peut s'effectuer par les opérations suivantes, lorsqu'on utilise un procédé expérimental.

a) On relève la fonction $(C)^{-1}$ qui transforme I en I'.

Pour cela, on forme sur le détecteur 10 l'image d'un point lumineux situé sur l'axe optique à l'intérieur du domaine de la scène, c'est-à-dire à l'intérieur de la profondeur de champ $\ell$. Pratiquement on pourra choisir un point lumineux placé à proximité du milieu de la scène.

On obtient ainsi, suivant un plan diamétral du détecteur, une fonction de variation de $(C)^{-1}$ en fonction de la distance à l'axe x ayant l'allure montrée sur la figure 2A.

b) On applique la transformée de Fourier à la fonction $(C)^{-1}$ ainsi relevée et on obtient une fonction bi-dimensionsionnelle de variation $\mathscr{F}[(C)^{-1}]$ en fonction de la fréquence spatiale $\omega$ du genre montré en figure 2B.

La transformation de Fourier peut être effectuée par l'un quelconque des programmes que proposent les constructeurs de matériel informatique et qui sera choisi en fonction du matériel mis en oeuvre.

c) On calcule et on mémorise provisoirement l'inverse $1/\mathscr{F}[(C)^{-1}]$ de la fonction $\mathscr{F}$. Cette opération est rendue possible car $\mathscr{F}$ ne s'annule pas aux fréquences spatiales élevées, puisque la fonction $(C)^{-1}$ présente une partie nette, fournie par le secteur qui donne une image nette du point lumineux (par exemple, dans le cas de la figure 1, le secteur $12_3$).

d) A partir de l'inverse $1/\mathscr{F}[(C)^{-1}]$, montrée en figure 2C, on calcule la transformée de Fourier inverse de $1/\mathscr{F}$, qui fournit C, qu'on mémorise (figure 2D).

Une fois cette opération effectuée il est possible de restituer directement sur un écran 14 une image corrigée, à l'aide d'un circuit de correction.

Dans le mode de réalisation montré en figure 1, ce circuit comporte successivement et dans le cas d'une caméra à matrice de CCD dont chaque ligne est lue indépendamment, un ensemble amplificateur-convertisseur analogique à numérique. Les signaux de sortie numérisés correspondant à chaque pixel sont stockés dans une mémoire vive appartenant à un ensemble de calcul 16. Cet ensemble est associé à une mémoire morte 18 qui contient les informations d'étalonnage correspondant aux figures 2A et 2B.

Le calculateur 16 effectue alors point à point les corrections requises et fournit les indications d'affichage à l'écran 14.

**Revendications**

1. Procédé de prise de vue d'une scène à grande profondeur de champ, suivant lequel on forme l'image de la scène sur un détecteur formé par une matrice de capteurs à l'aide d'une optique, caractérisé en ce qu'on forme sur le détecteur (10) l'image nette de plusieurs plans de la même scène, situés à des distances différentes, à l'aide de secteurs angulaires différents ($12_1$, $12_2$, $12_3$) de l'optique et en ce qu'on améliore le contraste de l'image par traitement des signaux fournis par le capteur, l'optique étant telle que tous les secteurs présentent les mêmes plans principaux.

2. Procédé selon la revendication 1, caractérisé en ce que l'optique comporte trois à six secteurs.

3. Procédé selon la revendication 1 ou 2, caractérisé en ce que le traitement est un seuillage constitué par la soustraction, à l'intensité de chaque pixel, d'une fraction déterminée du niveau moyen sur l'ensemble de l'image.

4. Procédé selon la revendication 1 ou 2, caractérisé en ce que le traitement comporte une convolution précédée d'une phase de détermination et de mémorisation de la fonction à convoluer à l'image fournie par le détecteur.

5. Dispositif de prise de vue à grande profondeur de champ, comprenant une optique (12) de formation d'image sur un détecteur (10) à matrice de capteurs électro-optiques, caractérisé en ce que l'optique est constituée de plusieurs secteurs ($12_1$, $12_2$, $12_3$) présentant des distances focales différentes et en ce que le détecteur est associé à des moyens de traitement numérique de l'image recevant les signaux fournis par les capteurs, tous les secteurs de l'optique ayant leurs plans principaux aux mêmes emplacements.

6. Dispositif selon la revendication 5, caractérisé en ce que lesdits moyens comprennent un circuit de détermination du niveau moyen d'intensité lumineuse de l'image par sommation des signaux fournis par les capteurs et division et un soustracteur.

FIG.1.

0280588

FIG.2A. $[C]^{-1}$

FIG.2B. $\mathcal{F}[(C)^{-1}]$

FIG.2C. $1/\mathcal{F}$

FIG.2D. $C$

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 129 931  (SONY)<br>* Page 2, ligne 57 - page 4, ligne 13; figures 7-13 *<br>--- | 1,2,5 | H 04 N    5/335<br>H 04 N    5/232 |
| A | PATENT ABSTRACTS OF JAPAN, vol. 8, no. 49 (E-230)[1486], 6 mars 1984; & JP-A-58 202 672 (MATSUSHITA DENKI SANGYO K.K.) 25-11-1983<br>--- | 1,5 | |
| A | PATENT ABSTRACTS OF JAPAN, vol. 9, no. 182 (P-376)[1905], 27 juillet 1985; & JP-A-60 52 934 (SUWA SEIKOSHA K.K.) 26-03-1985<br>--- | 1,5 | |
| A | US-A-4 404 594  (HANNAN)<br>----- | | |

DOMAINES TECHNIQUES
RECHERCHES (Int. Cl.4)

H 04 N
G 02 B

Le présent rapport a été établi pour toutes les revendications

| Lieu de la recherche | Date d'achèvement de la recherche | Examinateur |
|---|---|---|
| LA HAYE | 19-04-1988 | YVONNET J.W. |